Europäisches Patentamt

European Patent Office

Office européen des brevets

(19)

(11) Publication number : **0 583 126 A1**

# (12) EUROPEAN PATENT APPLICATION

(21) Application number : 93306103.8

(22) Date of filing : 02.08.93

(51) Int. Cl.⁵ : **C22B 34/12,** C21B 13/12,
C21B 11/10

(30) Priority : **11.08.92 ZA 926007**

(43) Date of publication of application :
**16.02.94 Bulletin 94/07**

(84) Designated Contracting States :
**DE DK ES FR GB IT SE**

(71) Applicant : **MINTEK**
**200 Hans Strijdom Avenue**
**Randburg, Transvaal Province (ZA)**

(72) Inventor : **Denton, Glen Michael**
**33 Rooihout Avenue**
**Weltevreden Park, Transvaal Province (ZA)**
Inventor : **Schoukens, Albert Francois Simon**
**7 Magnolia Place, Vale Road**
**Weltevreden Park, Transvaal Province (ZA)**

(74) Representative : **Jump, Timothy John Simon et al**
**Venner Shipley & Co. 20 Little Britain**
**London EC1A 7DH (GB)**

(54) **The production of high titania slag from ilmenite.**

(57) A process is provided for the production of a titanium rich slag and pig iron from ilmenite. The ilmenite is fed continuously, together with carbonaceous reductant, and in the absence of fluxes, to the molten bath of a circular d.c. arc furnace, preferably a plasma arc furnace, wherein the molten bath forms the anode and one or more electrodes in the furnace roof form the cathode. The feed materials are preferably preheated using heat contained in the off-gases from the process. Titanium rich slag which can be used as the feed to a chlorine based titanium dioxide production process is recovered continuously or intermittently and pig iron is tapped off as a by-product.

EP 0 583 126 A1

**THIS INVENTION** relates to the production of a high titania slag from ilmenite and, more particularly, is concerned with a process whereby it may be possible to improve the quality of the product obtained when processing ilmenite, but, possibly more importantly, whereby production costs can be saved at least in areas where the cost of electrical energy is significant.

Natural rutile, owing to its high titanium content and low levels of problem-causing impurities, has traditionally been the preferred feed stock for the production of titanium tetrachloride as an intermediate towards the production of titanium dioxide. Natural rutile is becoming more scarce and, consequently more costly, and the alternative method which uses ilmenite is becoming more favoured.

Ilmenite concentrates have a relatively low titanium content (usually about 50% titanium dioxide compared to about 96% in the case of rutile) and the high impurity content in the balance renders ilmenite generally unsuitable for direct chlorination to titanium tetrachloride as in the case of rutile. In consequence ilmenite has been used as feed stock for the production of pigment by the sulphate process which is becoming increasingly environmentally objectionable.

The alternative to the sulphate route, namely the chloride route, has a major problem associated therewith in that the direct chlorination of ilmenite results in a large quantity of ferric chloride being produced with an associated waste disposal problem. The chloride production of pigment is however preferred over the sulphate route because it requires less processing energy and yields a pigment of superior quality.

In general, manufacturers of the intermediate titanium tetrachloride are economically unable to process feed stocks containing less than 80% $TiO_2$ and, in addition, impose stringent limits on some impurities, in particular calcium and magnesium. The latter two elements are undesirable in fluidised bed chlorinators because they form high boiling point chlorides which tend to clog both the bed itself and gas ducting leading from the reactor. The usual specification imposed on calcium and magnesium is that the sum of the oxides of these two elements should not exceed 1.2% by mass.

In consequence of the unsuitability of ilmenite for direct use in the chloride process, processes involving the thermal reduction of ilmenite to produce a titania rich slag as well as a process involving combined prereduction and chemical leaching procedures to form a synthetic rutile have been proposed and used.

Of these the thermal reduction approach yields a product having a lower titanium grade but it does have the advantage of producing iron in a directly recoverable state.

Conventional alternating current open-arc smelting of various types of ilmenite ores is currently being carried out. The feed materials are introduced into a conventional six-in-line open-arc smelter via multiple feedports (typically more than 20 feed ports are used) most of which are situated near the sidewalls of the furnace in order to protect the furnace sidewalls from refractory erosion. This type of feeding renders process control extremely difficult and, as a result, irrespective of sophisticated computerised control which can be applied to such furnaces, localised regions of overreduced slag are periodically produced which gives rise to a foaming slag. This is regarded as loss of control and corrective measures which need to be taken lower the thermal efficiency and availability of the furnace.

A limited amount of testwork involving smelting of ilmenite in a d.c. transferred-arc plasma furnace at a 50 kW scale has been described by A D Brent on behalf of the applicant in Mintek report no. M304 dated 15th July 1987. This process has not been implemented by industry due to the following disadvantages:

1) The process was of a batch nature and therefore the degree of control required for feeding materials on a continuous basis with periodical or continuous withdrawal of on-grade titanium-rich slag and pig-iron from the furnace was not determined.

2) The feed materials are introduced via a single port situated near the sidewall of the furnace and not directly into the molten pool. This mode of operation could result in similar problems as those encountered in conventional a.c. open-arc smelting in addition to difficulties in the maintenance of a protective freeze lining.

3) A graphite lining had to be adopted as the use of a magnesite-based lining resulted in product contamination due to an inaccurate feed to power balance and therefore the inability to provide a protective freeze lining. A graphite lining cannot be employed in practice because it would be consumed by reaction with the furnace fume and gases. In addition, a graphite lining would result in an unknown reductant input and thus would affect the required ilmenite to reductant feed ratio and render metallurgical control of product grade difficult.

It is the object of this invention to provide a process for the thermal reduction of ilmenite in which the disadvantages outlined above are, at least to some extent, obviated.

In accordance with this invention there is provided a process for the reduction of ilmenite to yield a titania rich slag and pig iron, the process comprising feeding ilmenite simultaneously with carbonaceous reductant, in the absence of fluxes, to the central region of the molten bath of a circular furnace of d.c arc furnace type having one or more electrodes situated in the roof acting as cathode and the molten bath acting as anode, and wherein the feeding of the furnace is on a continuous basis; periodically or continuously withdrawing titania rich slag and pig iron from the furnace, and wherein a frozen lining is maintained between the molten bath and refractory lining.

Further preferred features of the invention provide for the frozen lining to be maintained by suitably adjusting the feed rate to power ratio, by water cooling, or by both adjusting the aforementioned ratio and water cooling the furnace; for the electrodes situated in the roof of the furnace to be graphite electrodes; for there to be only one such electride which is located; centrally for the one or more electrodes to be hollow in which case reactants are introduced into the furnace by way of the bore of such hollow electrode or electrodes;

for air to be substantially excluded from the interior of the furnace in which case enhancement of the exclusion of air may be achieved by operating the furnace at a slightly positive pressure; and for the furnace to be a plasma d.c. arc furnace.

A still further and important feature of the invention provides for the feed materials to be preheated. Preferably, in such a case, preheating is achieved, at least predominantly, by using the thermal calorific value of the off-gases from the furnace, optionally after cleaning.

Clearly in all cases the feed rate of materials and the energy input into the furnace are adjusted to achieve and maintain desired tapping temperatures of both slag and molten metal as well as the protective freeze lining in order to assure product quality and protect the furnace lining against excessive wear.

Preferably the carbonaceous reductant is employed in quantities in excess of the stoichiometric amount required to reduce all the iron oxides present in the ilmenite concentrate to metallic iron and to insure that oxygen in the off-gases is substantially in the form of carbon monoxide and the temperature of the furnace is controlled to between 1650 and 1750°C.

In order that the invention may be more fully understood, one example thereof will now be described in greater detail.

In this example tests were conducted in a 3,2 MVA furnace manufactured by applicant. The furnace was of a known d.c. plasma arc furnace type employing a single hollow graphite electrode located centrally above the furnace bath. A direct current power supply was employed in which the molten bath formed, in use, the anode, while the graphite electrode formed the cathode.

The furnace which had an outside diameter of 1780mm and a refractory lining thickness of only 140mm, was lined with a refractory material wherein the MgO content was approximately 96%. The hearth was lined with a similar material to a thickness of 800mm and a number of mild steel rods were used to make the d.c. (anode) electrical connection from the molten bath through the hearth refractory to the anode cable. Spray water-cooling was incorporated on the furnace shell sidewalls in order to assist in maintaining a protective slag freeze-lining. The molten bath in the furnace was heated to the operating temperature of between 1650°C and 1750°C with an initial metal charge.

The feed materials consisted of ilmenite ore concentrate and anthracite having the compositions detailed in Table 1. The feed materials were passed through the single hollow graphite electrode, situated centrally in the furnace and the liquid products were tapped intermittently during a continuous campaign lasting 11 days at a 500 kW gross energy input. The power and feedrate were balanced in order to maintain a slag tapping temperature of between 1650 and 1750°C. A power density of 0,2 MW/m² based on shell diameter, proved suitable in order to maintain a protective freeze lining thickness of approximately 0,15m.

Results of the smelting tests showing metal, slag and dust compositions are given in Table 2.

**Table 1:**

| Chemical analysis of the feed material (mass %). | | |
|---|---|---|
| Component | Ilmenite | Anthracite |
| $TiO_2$ | 48,17 | 0,11 |
| $Fe_2O_3$ | 51,50 | 1,18 |
| MgO | 0,38 | 0,10 |
| CaO | <0,05 | 0,13 |
| $Al_2O_3$ | 0,21 | 2,25 |
| $SiO_2$ | 1,02 | 3,75 |
| MnO | 0,78 | - |
| $V_2O_5$ | 0,10 | - |
| $Cr_2O_3$ | 0,05 | - |
| $P_2O_5$ | | 0,03 |
| $Na_2O$ | | 0,03 |
| $K_2O$ | | 0,21 |
| Fixed Carbon | | 83,5 |
| Volatiles | | 6,5 |
| Moisture | | 2,0 |

All metal oxide components were analysed for the total metallic content and expressed as the oxide.

**Table 2** : Smelting of ilmenite ore concentrate

| Test Series | Ilmenite kg | Anthracite kg | Metal kg | Slag kg | Dust kg |
|---|---|---|---|---|---|
| A | 2556 | 325 | 513 | 1615 | 78 |
| B | 2000 | 273 | 287 | 1163 | 114 |
| C | 1004 | 140 | 707 | 15 | 52 |
| D | 3499 | 492 | 1031 | 1691 | 196 |
| E | 1999 | 289 | 978 | 753 | 83 |
| F | 3492 | 494 | 1086 | 1733 | 218 |
| G | 5256 | 737 | 1518 | 2406 | 332 |

| Metal Analyses | Titanium | Silicon | Manganese | Carbon | Sulphur | Phosphorus |
|---|---|---|---|---|---|---|
| A | <0,005 | <0,05 | 0,008 | 1,50 | 0,10 | 0,032 |
| B | <0,007 | <0,05 | 0,026 | 1,83 | 0,12 | 0,026 |
| C | 0,020 | <0,05 | 0,025 | 1,90 | 0,11 | 0,026 |
| D | 0,019 | <0,05 | 0,018 | 1,69 | 0,10 | 0,026 |
| E | 0,019 | <0,05 | 0,033 | 1,83 | 0,11 | 0,023 |
| F | 0,011 | <0,05 | 0,027 | 1,52 | 0,11 | 0,024 |
| G | 0,018 | <0,05 | 0,031 | 1,42 | 0,10 | 0,025 |

EP 0 583 126 A1

**Slag Analyses**

|   | TiO$_2$ % | FeO % | MgO % | CaO % | Al$_2$O$_3$ % | SiO$_2$ % | MnO % |
|---|---|---|---|---|---|---|---|
| A | 74,6 | 18,7 | 0,83 | 0,14 | 1,35 | 1,96 | 1,20 |
| B | 84,5 | 9,6 | 1,13 | 0,18 | 2,30 | 2,30 | 1,17 |
| C | 90,3 | 5,2 | 0,96 | 0,16 | 2,08 | 2,18 | 1,18 |
| D | 84,1 | 10,8 | 0,81 | 0,17 | 1,74 | 2,52 | 1,19 |
| E | 87,8 | 6,8 | 1,13 | 0,23 | 2,49 | 2,40 | 1,26 |
| F | 85,5 | 9,6 | 0,81 | 0,20 | 1,95 | 2,19 | 1,21 |
| G | 85.0 | 9,8 | 0,79 | 0,19 | 1,88 | 2,16 | 1,26 |

**Dust Analyses**

|   | TiO$_2$ % | Fe$_2$O$_3$ % | MgO % | CaO % | Al$_2$O$_3$ % | SiO$_2$ % | MnO % |
|---|---|---|---|---|---|---|---|
| A | 27,7 | 41,3 | 5,51 | 0,92 | 2,05 | 9,85 | 2,95 |
| B | 36,7 | 39,8 | 2,12 | <0,32 | 1,74 | 10,04 | 3,82 |
| C | 45,8 | 33,3 | 1,41 | <0,20 | 1,61 | 9,63 | 3,79 |
| D | 44,6 | 33,7 | 1,72 | <0,24 | 1,68 | 9,80 | 3,79 |
| E | 44,2 | 27,3 | 2,69 | <0,21 | 1,63 | 9,06 | 3,62 |
| F | 48,0 | 29,8 | 1,31 | <0,20 | 1,75 | 9,15 | 3,86 |
| G | 46,9 | 32,6 | 1,00 | <0,20 | 1,32 | 8,07 | 3,48 |

All metal oxide components were analysed for the total metallic content and expressed as the oxide.

From the above it will be seen that acceptable grades of titanium dioxide are produced in most instances and, accordingly, in consequence of the effectiveness of control on a furnace of the nature described above, variables can be controlled to maintain the calcium and magnesium contents of the titanium dioxide at acceptable limits. Also the titanium dioxide content itself can be maintained above the minimum of 80% required for the chloride process and can be increased to 90% if required.

Pre-heating of the feed material has not yet been tested but theoretical calculations indicate that approximately a 30% saving on electrical energy input may be expected if the calorific value of the off-gases is employed for pre-heating the feed materials. It is envisaged that preheated feed materials, or even hot pre-reduced feed materials will not provide any difficulty with respect to maintaining the desired high temperature in feeding through a single or small number of inlet arrangements in contra-distinction to the conventional six-in-line furnaces where numerous inlets are provided.

It is envisaged that an extremely effective and economic process is provided by this invention the use of which will result in the simplified employment of ilmenite as a source of high titania slag for use as a feedstock to the chloride process for titanium tetrachloride production and thence titanium dioxide pigments.

## Claims

1. A process for the reduction of ilmenite to yield a titania rich slag and pig iron, the process comprising feeding ilmenite substantially simultaneously with carbonaceous reductant, in the substantial absence of fluxes, to the central region of the molten bath of a circular furnace of d.c arc furnace type having one or more electrodes situated in the roof acting as cathode and the molten bath acting as anode, and wherein the feeding of the furnace is carried out on a substantially continuous basis; periodically or continuously withdrawing titania rich slag and pig iron from the furnace, and wherein a frozen lining is maintained between the molten bath and refractory lining.

2. A process as claimed in claim 1 in which the electrode(s) situated in the roof of the furnace are graphite electrode(s).

3. A process as claimed in either of claims 1 or 2 in which there is only one electrode in the roof of the furnace.

4. A process as claimed in any one of claims 1 to 3 in which at least one electrode is hollow and reactants are introduced into the furnace by way of the bore of such hollow electrode or electrodes.

5. A process as claimed in claim 4 in which the hollow electrode is made of graphite.

6. A process as claimed in any one of the preceding claims in which air is substantially excluded from the interior of the furnace.

7. A process as claimed in claim 6 in which the furnace is operated at a slight positive pressure to achieve said exclusion of air.

8. A process as claimed in any one of the preceding claims in which the furnace is a plasma d.c. arc furnace.

9. A process as claimed in any one of the preceding claims in which the feed materials are preheated prior to introduction to the furnace bath.

10. A process as claimed in claim 9 in which preheating is achieved using the off-gases of the furnace, optionally after cleaning.

11. A process as claimed in any one of the preceding claims in which the carbonaceous reductant is used in quantities in excess of the stiochiometric amount required to reduce all the iron oxides to metallic iron.

12. A process as claimed in any one of the preceding claims, wherein the frozen lining is maintained by suitably adjusting the feed rate to power ratio.

13. A process as claimed in any one of the preceding claims, wherein frozen lining is maintained by water cooling the furnace.

14. A process as claimed in any one of the preceding claims in which the temperature of the furnace is controlled to between 1650°C and 1750°C.

EP 0 583 126 A1

European Patent
Office

# EUROPEAN SEARCH REPORT

Application Number

EP 93 30 6103

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | US-A-2 853 375 (PETER J. ENSIO)<br>* column 1, line 67 - column 2, line 60; claim 1 * | 1,2,11 | C22B34/12<br>C21B13/12<br>C21B11/10 |
| A | * column 3, line 62 - line 68; claim 1 * | 14 | |
| Y | US-A-4 146 390 (BJORN WIDELL)<br>* column 9, line 3; claim 1; figures 1-5 * | 1,2,11 | |
| A | | 3-6 | |
| A | ERZMETALL<br>vol. 41, no. 5 , May 1988 , WEINHEIM,DE<br>pages 278 - 284<br>BONG-CHAN BAN 'reduzierendes schmelzen von quilon-ilmenit im gleichstromlichtbogenofen'<br>* page 280, paragraph 2.3.1. * | 1,14 | |
| A | US-A-2 808 324 (RALPH S. MILLER)<br>* column 2, line 12 - line 33 *<br>* column 3, line 30 - line 39 *<br>* column 5, line 54 - column 6, line 59 * | 1 | |
| A | GB-A-926 334 (SOCIETE D'ELECTRO-CHEMIE,D'ELECTRO-METALLURGIE)<br>* claim 1 * | 1 | TECHNICAL FIELDS SEARCHED (Int.Cl.5)<br><br>C22B<br>C21B |
| A | FR-A-2 449 132 (FALCONBRIDGE NICKEL MINES)<br>* claim 1 * | 1,12 | |
| A | EP-A-0 087 405 (VOEST-ALPINE)<br>* page 8, line 1 - line 6; claim 1; figure 1 * | 1,8 | |
| A | US-A-2 680 681 (DAVID LEON ARMANT)<br>* column 5, line 44 - line 75; claim 1; figures 1,2 * | 3 | |

-/--

The present search report has been drawn up for all claims

| Place of search | Date of completion of the search | Examiner |
|---|---|---|
| THE HAGUE | 17 November 1993 | ELSEN, D |

European Patent
Office

**EUROPEAN SEARCH REPORT**

Application Number

EP 93 30 6103

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | FR-A-2 190 922 (CREUSOT-LOIRE ENTREPRISES) * claims 1,2; figure 1 * | 9,10 | |
| A | DE-A-24 15 967 (DEMAG) * page 3, paragraph 3 - page 4; claims 1,2,5 * | 13 | |
| | | | TECHNICAL FIELDS SEARCHED (Int.Cl.5) |

The present search report has been drawn up for all claims

| Place of search | Date of completion of the search | Examiner |
|---|---|---|
| THE HAGUE | 17 November 1993 | ELSEN, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)